# EUROPÄISCHE PATENTSCHRIFT

(11) **EP 2 804 735 B1**
(45) Veröffentlichungstag und Bekanntmachung des Hinweises auf die Patenterteilung: **08.02.2023**
(21) Anmeldenummer: 13700303.4
(22) Anmeldetag: 15.01.2013
(51) Int. Cl.: B29C 44/46

(54) **VERFAHREN ZUM AUFTRAGEN EINES AUFSCHÄUMENDEN REAKTIONSGEMISCHES**
METHOD FOR APPLYING A FOAMING REACTION MIXTURE
PROCÉDÉ D'APPLICATION D'UN MÉLANGE RÉACTIF MOUSSANT

(30) Priorität: 16.01.2012 EP 12151254
(43) Veröffentlichungstag der Anmeldung: 26.11.2014
(73) Patentinhaber: Covestro Intellectual Property GmbH & Co. KG, 51373 Leverkusen (DE)
(72) Erfinder: KÖSTER, Ralf, 51379 Leverkusen (DE); JUNG, Horst-Uwe, 50935 Köln (DE); LÖVENICH, Catherine, 51469 Bergisch Gladbach (DE)
(74) Vertreter: Levpat
(86) Internationale Anmeldenummer: PCT/EP2013/050675
(87) Internationale Veröffentlichungsnummer: WO 2013/107742

(56) Entgegenhaltungen:
- WO-A2-2009/077490
- DE-A1- 2 038 253
- DE-A1- 19 741 523
- DE-C1- 3 729 266
- DE-U1-202009 015 838
- DE-U1-202011 001 109
- US-A- 2 098 523
- US-A- 4 945 854

## Beschreibung

Die vorliegende Erfindung betrifft ein Verfahren zum Auftragen eines aufschäumenden Reaktionsgemisches auf eine Deckschicht. Darüber hinaus betrifft die vorliegende Erfindung ein Verfahren zur Herstellung von PUR/PIR-Schaum haltigen Verbundelementen.

### STAND DER TECHNIK

Verbundelemente aus einer Deckschicht und einem Isolierkern werden heutzutage in vielen Industriebereichen eingesetzt. Der grundlegende Aufbau solcher Verbundelemente besteht dabei aus einer Deckschicht, auf welche ein isolierend wirkender Werkstoff aufgebracht wird. Als Deckschichten können dabei beispielsweise Bleche aus beschichtetem Stahl, Edelstahl, Aluminium, Kupfer oder Legierungen der beiden letztgenannten Materialien eingesetzt werden. Darüber hinaus können aber auch Kunststoffplatten oder folien, Aluminiumfolien, Glasfaser- oder Mineralfaservliese sowie cellulosehaltige Materialien wie Papier, Pappe oder Pappmaschee als Deckschichtmaterialien eingesetzt werden. Die Wahl des geeigneten Deckschichtmaterials hängt dabei von dem beabsichtigten Einsatzgebiet der Verbundelemente und den sich daraus ergebenden Materialanforderungen ab. Als Isolierkern können insbesondere Schaumstoffe auf Basis von Polyurethan (PUR) und/oder von Polyisocyanurat (PIR) eingesetzt werden.

Neben der Verwendung solcher Verbundelemente zur Isolierung von beispielsweise Kühlhäusern finden diese auch immer häufiger Anwendung als Fassadenelemente an Gebäuden oder als Elemente von Industrietüren oder beispielsweise zur Bildung von Sektionaltoren. Entsprechende Verbundelemente, im Folgenden auch als Sandwich-Elemente bezeichnet, zeigen durch ihre Deckschicht eine dem verwendeten Material entsprechende Stabilität und Oberflächengestaltung, während der aufgebrachte Schaumstoff entsprechende wärmeisolierende Eigenschaften ermöglicht.

Zur Herstellung entsprechender Verbundelemente wird auf eine bereitgestellte Deckschicht ein schäumendes Reaktionsgemisch mittels einer Auftragsvorrichtung aufgebracht. Hierzu werden zum Beispiel bei der Verwendung von Schaumstoffen auf Basis von Isocyanaten die entsprechenden Polyol-Komponenten und Isocyanat-Komponenten miteinander gemischt und auf die Deckschicht aufgetragen, auf welcher diese aufschäumen und aushärten.

Als Auftragsvorrichtung zur Aufbringung des schäumenden Reaktionsgemisches auf die Deckschicht kommen häufig rohrförmige Hohlkörper zum Einsatz, welche entlang ihrer Längserstreckung mit einer Mehrzahl von Austrittsöffnungen versehen sind, aus welchen das in das Rohr eingebrachte Reaktionsgemisch austreten kann. Solche rohrförmigen Hohlkörper werden üblicherweise als Gießharken bezeichnet.

Um eine möglichst gleichmäßige Verteilung des schäumenden Reaktionsgemisches auf der Deckschicht zu erreichen, sind die als Austrittsrohre ausgeführten Austrittsöffnungen entsprechend optimiert über der Längserstreckung der Gießharke verteilt. Um wiederum eine optimierte Verteilung des schäumenden Reaktionsgemisches entlang der Längserstreckung der Deckschicht zu erreichen, kann entweder die Gießharke oszillierend über die Deckschicht bewegt werden oder die Gießharke ist ortsfest angeordnet und die Deckschicht wird unter der Gießharke bewegt. Dies kann sowohl in kontinuierlicher als auch in diskontinuierlicher Weise erfolgen.

So offenbart beispielsweise die WO 2009/077490 A1 ein Verfahren zur Herstellung von Verbundelementen, bestehend aus mindestens einer Deckschicht und einem Hartschaumstoff auf Isocyanatbasis, wobei die Deckschicht kontinuierlich bewegt wird und das Ausgangsmaterial für den Hartschaumstoff auf Isocyanatbasis auf die Deckschicht aufgebracht wird, wobei der Auftrag des flüssigen Ausgangsmaterials für den Hartschaumstoff auf Isocyanatbasis mittels mindestens einem feststehenden, parallel zur Deckschichtenebene und rechtwinklig zur Bewegungsrichtung zur Deckschicht angebrachten, mit Öffnungen versehenen Rohr erfolgt.

WO 2008/018787 A1 offenbart eine Vorrichtung zur Aufbringung einer viskosen Mischung auf eine Oberfläche mittels einer oder mehrerer Auslassöffnungen, wobei der Vorrichtung die viskose Mischung mittels einer rohrförmigen Zuführvorrichtung zugeführt wird.

Das deutsche Gebrauchsmuster DE 20 2011 001 109 U1 offenbart eine Vorrichtung zum Auftrag von flüssigen Reaktionsgemischen auf eine Deckschicht, wobei die Deckschicht kontinuierlich bewegt wird und das flüssige Reaktionsgemisch auf die Deckschicht aufgebracht wird, bestehend aus mindestens einem Rohr, das mit Öffnungen in Richtung der Deckschicht versehen ist, und welches oberhalb der Deckschicht parallel zur Deckschichtenebene und rechtwinklig zur Bewegungsrichtung der Deckschicht angebracht ist, wobei die äußeren Öffnungen an der Seite des Rohres, die sich über dem Rand der Deckschicht befindet, in einem Winkel von 1° bis 50° in Richtung des Randes der Deckschicht angebracht sind.

Das Deutsche Gebrauchsmuster DE 20 2009 015 838 U1 offenbart eine Vorrichtung zum Auftrag von flüssigen Reaktionsgemischen auf eine Deckschicht, wobei die Deckschicht kontinuierlich bewegt wird und das flüssige Reaktionsgemisch auf die Deckschicht aufgebracht wird, wobei die Vorrichtung mindestens ein mit Öffnungen versehenes Rohr ist, wobei das Rohr aus Kunststoff besteht.

Die bekannten Formen der Gießharken können zu dem Nachteil führen, dass abhängig von der Form und Führung der Deckschicht relativ zur Gießharke eine gleichmäßige Verteilung des Reaktionsgemisches nicht vorteilhaft möglicht ist. Insbesondere in den Seitenbereichen der Deckschicht selbst oder bei auf der Deckschicht vorhandenen Befestigungselementen ist eine gleichmäßige Verteilung des Reaktionsgemisches beispielsweise in den Seitenbereichen der Befestigungselemente nicht gewährleistet.

### OFFENBARUNG DER ERFINDUNG

Es ist daher die Aufgabe der vorliegenden Erfindung, ein verbessertes Verfahren zur Herstellung von Verbundelementen aus einer Deckschicht und einer darauf aufgebrachten Schaumstoffschicht anzugeben, welche insbesondere eine verbesserte Auftragung eines den Schaumstoff ausbildenden schäumenden Reaktionsgemisches erlaubt.

Gelöst wird diese Aufgabe durch ein Verfahren zum Auftragen eines aufschäumenden Reaktionsgemisches auf eine Deckschicht, unter Verwendung einer Vorrichtung umfassend wenigstens zwei Gießharken mit einem rohrförmigen Hohlkörper, welcher Hohlkörper sich entlang einer Mittelachse erstreckt und wenigstens zwei Austrittsöffnungen zum Austritt des aufschäumenden Reaktionsgemisches aufweist, und wobei die Gießharke und die Deckschicht in einer Längsachse relativ zueinander bewegbar sind und es ist erfindungsgemäß vorgesehen, dass Mittelachse der mindestens einen Gießharke und die Längsachse der Bewegung einen Winkel von ≤ 80° zueinander einschließen.

Es hat sich überraschenderweise gezeigt, dass mit einer Anordnung der Gießharke in einem Winkel ≤ 80° auch Verbundelemente mit einer komplizierten Geometrie besser hergestellt werden können. Zum Beispiel ist es möglich, im Fall einer verdeckten Befestigung des Verbundelementes, wie sie beispielsweise bei Fassadenelementen vorgesehen wird, eine verbesserte Materialverteilung des Schaumstoffes auf der Deckschicht in den Seitenbereichen zu gewährleisten. Ein weiterer Vorteil ergibt sich bei der Herstellung von Sicken aufweisenden Verbundelementen, welche Sicken insbesondere ein Wellenprofil bilden, wie sie beispielsweise bei Dachprofilen eingesetzt werden. Hier führt die winkelige Anordnung der Gießharke zu einem optimierten Auftrag des schäumenden Reaktionsgemisches in den Sicken.

Unter dem Begriff "rohrförmig" ist im Sinne der Erfindung jede geeignete Hohlprofilform zu verstehen, in der das Reaktionsgemisch an die Austrittsöffnungen geleitet werden kann. Insbesondere sind dabei Hohlprofile mit einem runden, elliptischen oder eckigen Profilquerschnitt sowie konisch verlaufende Hohlprofile umfasst.

Grundsätzlich wird zum Auftrag eines aufschäumenden Reaktionsgemisches die Deckschicht unter den Gießharken hinwegbewegt, beispielsweise kontinuierlich als endlose Materialbahn. Die aufgeführte relativ zueinander vorgesehene Bewegung zwischen den Gießharken und der Deckschicht kann im Sinne der vorliegenden Erfindung jedoch auch dann erzeugt werden, wenn die Gießharken über einer ruhenden Deckschicht hinwegbewegt werden oder wenn sowohl die Gießharken als auch die Deckschicht bewegt werden.

Der rohrförmige Hohlkörper muss nicht entlang einer gerade ausgebildeten Mittelachse verlaufen und kann zur Erzielung des gleichen erfindungsgemäßen Effektes einer verbesserten Auftragung des den Schaumstoff ausbildenden schäumenden Reaktionsgemisches mit einer Krümmung ausgebildet sein. Der Winkel kann beispielsweise an Sehnen abgegriffen werden, die durch die Enden der Gießharken verlaufen.

Im erfindungsgemäßen Verfahren sind die wenigstens zwei Gießharken in betragsgleichen Winkeln zur Bewegungsachse der Deckschicht angeordnet. Betragsgleich bedeutet im Sinne der Erfindung, dass der Betrag der Winkel, in denen die Gießharken zur Achse der Bewegungsrichtung zwischen der Deckschicht und der Gießharke ausgerichtet sind, im Wesentlichen gleich ist, wobei es vorgesehen seien kann, dass die beiden Gießharken V-förmig zueinander angeordnet sind. Insbesondere kann vorgesehen sein, dass der Vektor der Bewegungsrichtung die Winkelhalbierende des zwischen den beiden Gießharken aufgespannten Winkels bildet. Hierdurch ist in vorteilhafter Weise eine gleichmäßige Verteilung des Reaktionsgemisches über der gesamten Fläche der Deckschicht auch bei größeren Profilbreiten möglich.

Alternativ ist im erfindungsgemäßem Verfahren vorgesehen, dass der Betrag der Winkel, in denen die Gießharken zur Bewegungsrichtung der Deckschicht ausgerichtet sind, unterschiedlich ist, so dass die beiden Gießharken in der Form eines unsymmetrischen V zueinander angeordnet sind. Hierdurch ist es beispielsweise möglich, dass im Fall einer verdeckten Befestigung des Verbundelementes, wie sie beispielsweise bei Fassadenelementen vorgesehen wird, eine verbesserte Materialverteilung des Schaumstoffes auf der Deckschicht in den Seitenbereichen gewährleistet wird und mehr Material in die Nase des Profils zugeführt wird. Ein weiterer Vorteil ergibt sich bei der Herstellung von Sicken (Wellenprofil) aufweisenden Verbundelementen, wie sie beispielsweise als Dachprofile eingesetzt werden. Hier führt die zueinander V-förmig gepfeilte Anordnung der Gießharken zu einem optimierten Auftrag des schäumenden Reaktionsgemisches in den Sicken.

In einer Ausgestaltung des erfindungsgemäßen Verfahrens beträgt die Anzahl der Austrittsöffnungen der Gießharke zwischen drei bis vierzig. Vorteilhafterweise wird die Anzahl der Austrittsöffnungen dabei in Abhängigkeit des Quellverhaltens des schäumenden Reaktionsgemisches und der Profilbreite der Deckschicht ausgewählt.

Vorzugsweise sind die Gießharken in der Vorrichtung in einem Winkel zwischen ≥ 60° und ≤ 80° zur Bewegungsrichtung der Deckschicht angeordnet. Es hat sich überraschenderweise gezeigt, dass die Anordnung der Gießharke in einem solchen Winkel insbesondere geeignet ist, auch bei einer komplizierten Geometrie des Profils der Deckschicht die Ausbildung einer gleichmäßigen Schaumstoffschicht zu gewährleisten.

Gemäß einer Ausgestaltung des erfindungsgemäßen Verfahrens sind die wenigstens zwei Gießharken im Wesentlichen parallel zur Ebene der Deckschicht ausgerichtet. Die V-förmig zueinander angewinkelten Gießharken spannen mit den Mittelachsen ihrer rohrförmigen Hohlkörper dabei eine Ebene auf, die sich parallel zur Ebene erstreckt, die durch die Deckschicht gebildet ist. Insbesondere kann die Mittelachse des rohrförmigen Hohlkörpers in einer stechenden Anordnung in Bewegungsrichtung der Gießharke relativ zur Deckschicht weisen oder die Mittelachse des rohrförmigen Hohlkörpers weist in einer schleppenden Anordnung entgegengesetzt zur Bewegungsrichtung der Gießharke relativ zur Deckschicht.

Mit weiterem Vorteil kann vorgesehen sein, dass die Gießharken jeweils eine Zuführung für das Reaktionsgemisch in den rohrförmigen Hohlkörper aufweisen, welche in Bezug auf die Länge des rohrförmigen Hohlkörpers im Wesentlichen mittig in den rohrförmigen Hohlkörper mündet und welche vorzugsweise baueinheitlich mit dem rohrförmigen Hohlkörper ausgebildet ist. Bei einer solchen Zuführung ist es darüber hinaus vorgesehen, dass die Gießharken endseitig, also an den jeweiligen Enden ihrer Längserstreckung, geschlossen sind, so dass das zugeführte Reaktionsgemisch an den jeweiligen Enden nicht austreten kann.

Ebenso kann es erfindungsgemäß vorgesehen sein, dass die Gießharken jeweils eine Zuführung für das Reaktionsgemisch in den rohrförmigen Hohlkörper aufweisen, welche am Ende der Gießharke in den rohrförmigen Hohlkörper mündet und das Reaktionsgemisch endseitig einspeist. Hierbei kann es vorteilhaft sein, dass das Reaktionsgemisch entweder an einem Ende der Längserstreckung der Gießharke dem rohrförmigen Hohlkörper zugefügt wird, weiterbildend kann vorgesehen sein, dass das Reaktionsgemisch an beiden längsseitigen Enden der Gießharke dem rohrförmigen Hohlkörper zugeführt wird.

Sowohl bei einer im Wesentlichen mittigen Anordnung der Zuführung als auch bei einer endseitig angeordneten Zuführung kann ein Zuführungsrohr als integraler Bestandteil der Gießharke vorgesehen sein. Bei einer Herstellung der Gießharke beispielsweise mittels einer Spritzgusstechnik kann ein solches Zuführungsrohr so in vorteilhafter Weise als Formbestandteil der Gießharke vorgesehen sein und Harke und Zuführung können gemeinsam gespritzt werden. Dabei kann als Material zur Herstellung der Gießharke sowohl ein geeigneter Kunststoff als auch ein geeignetes Metall oder eine geeignete Legierung eingesetzt werden.

In einer weiter bevorzugten Ausgestaltung der Vorrichtung ist vorgesehen, dass die Austrittsöffnungen durch Austrittsrohre gebildet sind, wobei vorzugsweise die Länge der Austrittsrohre mit zunehmendem Abstand zur Einspeisestelle des Reaktionsgemisches von der Zuführung in den rohrförmigen Hohlkörper abnimmt. Damit wird erreicht, dass aus jedem am rohrförmigen Hohlkörper angeordneten Austrittsrohr etwa der gleiche Massenstrom an Reaktionsgemisch austritt. Ebenso ist es möglich, dass die Gießharke einen breiteren Strömungsquerschnitt aufweist und die unterschiedlichen Längen der Austrittsrohre werden durch verschieden lange Bohrungen durch das Profil der Austrittsrohre hindurch gebildet. Ebenso kann es vorgesehen sein, dass verschieden lange Auslässe direkt bei der Fertigung der Gießharke, beispielsweise mittels Spritzgusstechniken, vorgesehen werden.

Gemäß einer weiteren Ausgestaltung der Erfindung ist vorgesehen, dass der Innendurchmesser des rohrförmigen Hohlkörpers mit zunehmendem Abstand von der Einspeisestelle des Reaktionsgemisches durch die Zuführung abnimmt. Hierdurch kann ebenfalls in vorteilhafter Weise die Gleichmäßigkeit des Austritts des schäumenden Reaktionsgemisches erhöht und damit die Gleichmäßigkeit der Auftragung des Reaktionsgemisches auf die Deckschicht verbessert werden. Gemäß einer noch weiteren Ausgestaltung der Vorrichtung ist vorgesehen, dass diese einen Mischkopf für das aufschäumende Reaktionsgemisch aufweist, wobei der Mischkopf mit den

wenigstens zwei Gießharken fluidisch verbunden ist und wobei insbesondere der Mischkopf den wenigstens zwei Gießharken fluidisch vorgeschaltet ist. In dem Mischkopf werden die einzelnen Komponenten des schäumenden Reaktionsgemisches unmittelbar vor dem Auftrag des Reaktionsgemisches auf die Deckschicht gemischt. Dabei kann der Mischkopf über mindestens zwei Eingänge für Komponenten des schäumenden Reaktionsgemisches und einen Ausgang verfügen, der fluidisch mit der Gießharke verbunden ist. So kann es beispielsweise vorgesehen sein, dass über einen Eingang eine geeignete Polyol-Komponente und über einen weiteren Eingang eine geeignete Isocyanat-Komponente dem Mischkopf zugeführt wird, welche dann im Mischkopf zu einem schäumfähigen Reaktionsgemisch gemischt werden und die Mischung wird über die Gießharke auf die Deckschicht aufgetragen.

Das schäumende Reaktionsgemisch kann beispielsweise eine gegenüber Polyisocyanaten reaktive Verbindung und ein Polyisocyanat enthalten. Geeignete gegenüber Isocyanaten reaktive Verbindungen sind insbesondere Polyole, Polyamine, Polyaminoalkohole und Polythiophene.

Beispiele für Polyamine sind Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 1,3- und 1,4-Xylylendiamin, α, α, α', α'-Tetramethyl-1,3- und -1,4-xylylendiamin und 4,4'-Diaminodicyclohexylmethan, Diethylmethylbenzoldiamin (DETDA), 4,4'-Diamino-3,3'-dichlordiphenylmethane (MOCA), Dimethylethylendiamin, 1,4-Bis(aminomethyl)cyclohexan, 4,4'-Diamino-3,3'-dimethyldicyclohexylmethan und 4,4'-Diamino-3,5-diethyl-3',5'-diisopropyldicyclohexylmethan. Weiterhin geeignet sind polymere Polyamine wie Polyoxyalkylenamine.

Beispiele für Aminoalkohole sind N-Aminoethylethanolamin, Ethanolamin, 3-Aminopropanol, Neopentanolamin und Diethanolamin.

Beispiele für Polythiole sind Di(2-mercaptoethyl)ether, Pentaerythritoltetrakisthioglycolat, Pentaerythritoltetrakis(3-mercaptopropionat) und 1,2-Bis((2-mercaptoethyl)thio)-3-mercaptopropan.

Vorzugsweise ist das Polyol ausgewählt aus der Gruppe umfassend Polyetherpolyole, Polyesterpolyole, Polycarbonatpolyole, Polyetheresterpolyole, und/oder Polyacrylatpolyole und wobei weiterhin die OH-Zahl des Polyols ≥ 100 mg KOH/g bis ≤ 800 mg KOH/g, besonders bevorzugt > 350 mg KOH/g bis ≤ 650 mg KOH/g, und die durchschnittliche OH-Funktionalität der Polyole ≥ 2 beträgt.

Verwendbare Polyole können beispielsweise ein zahlenmittleres Molekulargewicht Mₙ von ≥ 60 g/mol bis ≤ 8000 g/mol, bevorzugt von ≥ 90 g/mol bis ≤ 5000 g/mol und mehr bevorzugt von ≥ 92 g/mol bis ≤ 1000 g/mol aufweisen. Die OH-Zahl gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der genannten Polyole ist ≥ 2, beispielsweise in einem Bereich von ≥ 2 bis ≤ 6, vorzugsweise von ≥ 2,1 bis ≤ 4 und mehr bevorzugt von ≥ 2,2 bis ≤ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle sind zum Beispiel Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Verwendbare Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylendetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole können Polyetherpolyole eingesetzt werden, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten. Polyetheresterpolyole können durch die Reaktion von Polycarbonsäureanhydriden mit Diolen und anschließende Alkoxylieren dieser erhaltenen Verbindungen erhalten werden.

Startermoleküle sind zum Beispiel Diole mit primären OH-Gruppen und zahlenmittleren Molekulargewichten Mₙ von vorzugsweise ≥ 18 g/mol bis ≤ 400 g/mol oder von ≥ 62 g/mol bis ≤ 200 g/mol wie 1,2-Ethandiol, 1,3-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 18 g/mol bis ≤ 400 g/mol oder von ≥ 62 g/mol bis ≤ 200 g/mol. Bevorzugt ist Glycerin.

Polyacrylatpolyole können durch radikalische Polymerisation von Hydroxylgruppen aufweisenden, olefinisch ungesättigte Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Beispiele von geeigneten Polyisocyanaten sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) oder höhere Homologe (polymeres MDI, pMDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen. Besonders bevorzugt ist eine Mischung aus MDI und pMDI.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass im Reaktionsgemisch die Anzahl der NCO-Gruppen im Isocyanat und die Anzahl der gegenüber Isocyanaten reaktiven Gruppen in einem Zahlenverhältnis von ≥ 70:100 bis ≤ 500:100 zueinander stehen. Diese Kenngröße kann auch in einem Bereich von ≥ 180:100 bis ≤ 330:100 oder aber auch von ≥ 90:100 bis ≤ 140:100 liegen.

Das schäumende Reaktionsgemisch kann beispielsweise auch Acrylamid, Epoxide und/oder Phenol, Melamin und/oder Hamstoff-Formaldehyd umfassen. Hierbei können Polyacrylamid, Epoxy-Schäume-, Phenolharz-Schäume, Melaminharz-Schäume oder Harnstoff-Schäume erhalten werden. Gemäß einer weiteren Ausgestaltung der erfindungsgemäßen Vorrichtung sind die Austrittsrohre der Gießharke in einem Winkel von ≥ 5° und vorzugsweise von ≥ 5° und ≤ 30° zu einer orthogonal zur Ebene der Deckschicht stehenden Achse ausgerichtet. Hierdurch wird die Geschwindigkeit, mit der das schäumende Reaktionsgemisch auf die unter der Gießharke vorhandene Deckschicht auftrifft, verringert, wodurch in vorteilhafter Weise eine gleichmäßigere Auftragung der Mischung auf die Deckschicht erreicht werden kann. In einer weiteren Ausgestaltung kann es vorgesehen sein, dass die Austrittsrohre entgegen der Bewegungsrichtung der beweglich angeordneten Deckschicht ausgerichtet sind. Hierdurch kann die Breite der Aufprallzone des aufschäumenden Reaktionsgemisches vergrößert werden, so dass die Stränge des aufschäumenden Reaktionsgemisches schneller zusammenfließen.

### BEVORZUGTE AUSFÜHRUNGSBEISPIELE DER ERFINDUNG

Die Erfindung wird nachfolgend anhand von Figuren weiter erläutert. Es zeigt:
- Fig. 1: eine schematische Ansicht einer Vorrichtung zur Herstellung eines Verbundelementes;
- Fig. 2: eine Draufsicht auf eine Vorrichtung;
- Fig. 3: eine Frontansicht einer Vorrichtung;
- Fig. 4: eine Seitenansicht einer Vorrichtung;
- Fig. 5: eine schematische Detailansicht einer in einer Vorrichtung einsetzbaren Gießharke;
- Fig. 6: schematisch die in einem Austrittswinkel angeordneten Austrittsrohre.

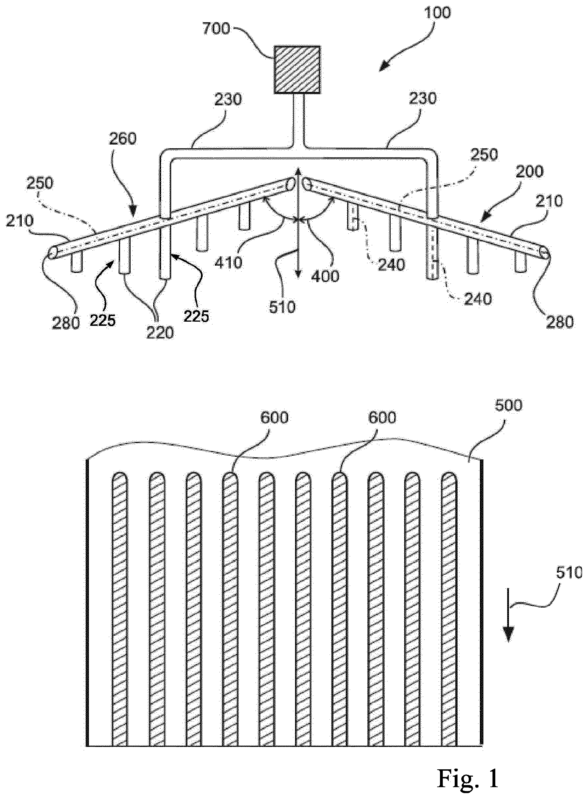

Fig.1 zeigt eine Vorrichtung 100 zum Auftragen eines aufschäumenden Reaktionsgemisches 600 auf eine beweglich angeordnete Deckschicht 500. Die Vorrichtung 100 umfasst in der gezeigten Ausgestaltung zwei Gießharken 200, 260 mit jeweils einem rohrförmigen Hohlkörper 210. Der rohrförmige Hohlkörper 210 weist eine Mehrzahl von Austrittsöffnungen 220 in Form von Austrittsrohren 225 auf, aus denen das aufschäumende Reaktionsgemisch 600 herausgeführt wird und die Austrittsöffnung 220 befindet sich dabei am freien Ende des Austrittsrohres 225. Die Gießharken 200, 260 sind erfindungsgemäß in betragsgleichen Winkeln 400, 410 ≤ 80° zur Bewegungsrichtung 510 der Deckschicht 500 angeordnet. Die Gießharken 200, 260 weisen jeweils eine Zuführung 230 für das aufschäumende Reaktionsgemisch 600 in den rohrförmigen Hohlkörper 210 auf. Die Zuführung 230 ist im Wesentlichen mittig auf der Länge der Gießharken 200, 260 angeordnet. Die Länge 240 der Austrittsrohre 225 nimmt von der Zuführung 230 in Richtung des Endes 280 der Gießharken 200, 260 ab. Das schäumende Reaktionsgemisch 600 wird den Gießharken 200, 260 aus einem Mischkopf 700 über die Zuführungen 230 zugeführt und tritt über die Austrittsöffnungen 220 aus, von wo sie auf die Deckschicht 500 gelangt und dort zur Ausbildung eines Schaumstoffes aufquillt und aushärtet.

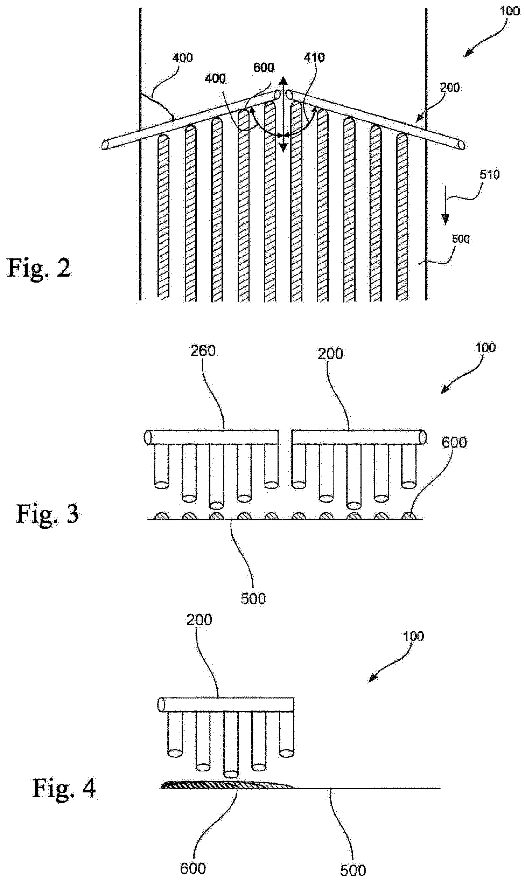

Fig. 2 zeigt eine Draufsicht auf eine Vorrichtung 100, wobei die Gießharken 200, 260 in einem Winkel 400 von ≤ 80° zur Bewegungsrichtung 510 der Deckschicht 500 ausgerichtet sind. Aus den Gießharken 200, 260 strömt das aufschäumende Reaktionsgemisch 600 auf die Deckschicht 500.

Fig. 3 zeigt eine Frontansicht einer Vorrichtung 100, in welcher die beiden Gießharken 200, 260 zu erkennen sind, mittels welcher das aufschäumende Reaktionsgemisch 600 auf die Deckschicht 500 aufbringbar ist.

Fig. 4 zeigt eine Seitenansicht einer Vorrichtung 100, wobei aufgrund der Perspektive lediglich eine Gießharke 200 zu erkennen ist, aus welcher das aufschäumende Reaktionsgemisch 600 auf die Deckschicht 500 aufbringbar ist.

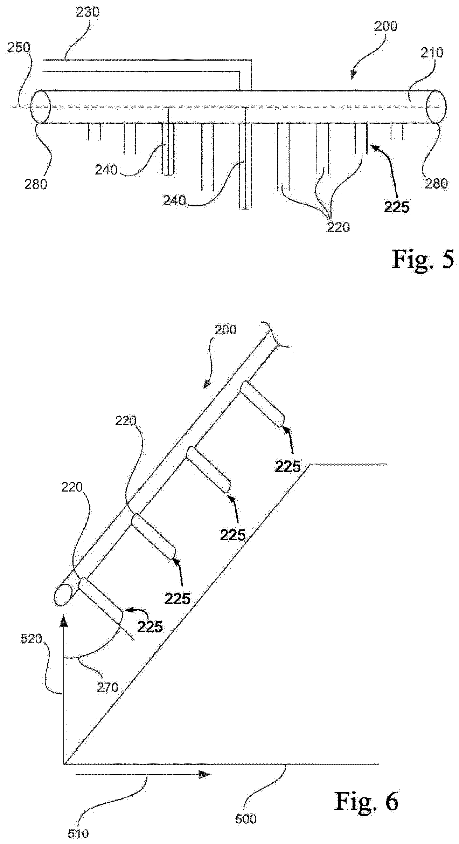

Fig. 5 zeigt eine schematische Detailansicht einer in einer Vorrichtung einsetzbaren Gießharke 200. Die Gießharke 200 weist eine Zuführung 230 für das aufschäumende Reaktionsgemisch in den rohrförmigen Hohlkörper 210 auf. Die Zuführung 230 ist im Wesentlichen mittig an der Gießharke 200 angeordnet. Die Länge 240 zwischen der Mittelachse 250 des rohrförmigen Hohlkörpers 210 und der Austrittsöffnungen 220 in Form von Austrittsrohren 225 nimmt von der Zuführung 230 in Richtung des Endes 280 der Gießharke 200 ab. Das schäumende Reaktionsgemisch 600 wird der Gießharke 200 über die Zuführungen 230 zugeführt und tritt über die Austrittsöffnungen 220 aus, von wo sie auf die Deckschicht 500 gelangt und dort zur Ausbildung eines Schaumstoffes aufquillt und aushärtet. Durch die unterschiedliche Länge 240 der Austrittsöffnung 220 in Abhängigkeit von der Entfernung der jeweiligen Austrittsöffnung 220 von der Zuführung 230 wird ein gleichmäßiges und gleichzeitiges Auftreffen des Reaktionsgemisches 600 auf die Deckschicht 500 erreicht.

Fig. 6 zeigt schematisch die gemäß einer Ausgestaltung der Erfindung in einem Austrittswinkel 270 angeordneten Austrittsöffnungen 220, ebenfalls dargestellt in Form von Austrittsrohren 225. Die Austrittsrohre 225 sind dabei in einem Winkel 270 zur orthogonal zur Ebene der Deckschicht 500 stehenden Achse 520 angeordnet. Die Anwinkelung erfolgt dabei in der Art, dass die Austrittsrohre 225 in Richtung der Bewegungsrichtung 510 der beweglich angeordneten Deckschicht 500 ausgerichtet sind. Hierdurch verringert sich die Auftreffgeschwindigkeit des Reaktionsgemisches auf die Deckschicht 500, wodurch ein gleichmäßigeres Aufquellen des schäumenden Reaktionsgemisches erreicht werden kann. Die Austrittsrohre 225 können auch entgegen der Bewegungsrichtung 510 der beweglichen Deckschicht 500 angeordnet sein. Hierdurch wird die Breite der Aufprallzone des aufschäumenden Reaktionsgemisches 600 vergrößert, so dass die Stränge des aufschäumenden Reaktionsgemisches 600 schneller zusammenfließen.

Die zuvor beschrieben Ausführungen können in beliebiger Weise miteinander kombiniert werden.

### Bezugszeichenliste

- 100: Vorrichtung
- 200: Gießharke
- 210: rohrförmiger Hohlkörper
- 220: Austrittsöffnung
- 225: Austrittsrohr
- 230: Zuführung
- 240: Länge Auslass
- 250: Mittelachse rohrförmiger Hohlkörper
- 260: zweite Gießharke
- 270: Austrittswinkel
- 280: Ende der Gießharke
- 400: Winkel
- 410: Winkel
- 500: Deckschicht
- 510: Längsachse, Bewegungsrichtung
- 520: orthogonale Achse
- 600: aufschäumendes Reaktionsgemisch
- 700: Mischkopf

## Patentansprüche

1. Verfahren zum Auftragen eines aufschäumenden Reaktionsgemisches (600) auf eine Deckschicht (500) zur Herstellung eines Verbundelementes, unter Verwendung einer Vorrichtung (100), umfassend wenigstens_zwei Gießharken (200, 260) mit einem rohrförmigen Hohlkörper (210), welcher Hohlkörper (210) sich entlang einer Mittelachse (250) erstreckt und wenigstens zwei Austrittsöffnungen (220) zum Austritt des aufschäumenden Reaktionsgemisches (600) aufweist, und wobei die Gießharken (200, 260) und die Deckschicht (500) in einer Längsachse (510) relativ zueinander bewegt werden,
**dadurch gekennzeichnet, dass** die Mittelachse (250) der wenigstens zwei Gießharken (200, 260) und die Längsachse (510) der Bewegung einen Winkel (400, 410) von ≤ 80° zueinander einschließen und
a) dass die Gießharken in betragsgleichen Winkeln zur Bewegungsachse der Deckschicht angeordnet sind_oder
b) dass der Betrag der Winkel, in denen zwei Gießharken zur Bewegungsrichtung der Deckschicht ausgerichtet sind, unterschiedlich ist, so dass die beiden Gießharken in der Form eines unsymmetrischen V zueinander angeordnet sind.-

2. Verfahren nach Anspruch 1, wobei die Mittelachsen (250) der wenigstens zwei Gießharken (200, 260) parallel zur Ebene der Deckschicht (500) ausgerichtet sind, und die V-förmig zueinander angewinkelten Gießharken mit den Mittelachsen ihrer rohrförmigen Hohlkörper dabei eine Ebene aufspannen, die sich parallel zur Ebene erstreckt, die durch die Deckschicht gebildet ist, und wobei
- die Mittelachse (250) des rohrförmigen Hohlkörpers (210) in einer stechenden Anordnung durch den Winkel (400, 410) in die Bewegungsrichtung der Gießharken (200, 260) relativ zur Deckschicht (500) weist oder
- die Mittelachse (250) des rohrförmigen Hohlkörpers (210) in einer schleppenden Anordnung durch den Winkel (400, 410) entgegengesetzt zur Bewegungsrichtung der Gießharken (200, 260) relativ zur Deckschicht (500) weist.

3. Verfahren nach einem der Ansprüche 1 bis 2, wobei die Anzahl der Austrittsöffnungen (220) einer Gießharke (200, 260) zwischen drei bis vierzig beträgt.

4. Verfahren nach einem der vorgenannten Ansprüche, wobei die Mittelachse (250) einer Gießharke (200, 260) in einem Winkel (400, 410) zwischen ≥ 60° und ≤ 80° zur Längsachse (510) der Bewegung angeordnet ist.

5. Verfahren nach einem der vorgenannten Ansprüche, wobei die Gießharken (200, 260) eine Zuführung (230) für das Reaktionsgemisch (600) in den rohrförmigen Hohlkörper (210) aufweisen, welche in Bezug auf die Länge des rohrförmigen Hohlkörpers (210) im Wesentlichen mittig in den rohrförmigen Hohlkörper (210) mündet und welche vorzugsweise baueinheitlich mit dem rohrförmigen Hohlkörper (210) ausgebildet ist.

6. Verfahren nach einem der Ansprüche 1 bis 4, wobei die Gießharken (200, 260) eine Zuführung (230) für das Reaktionsgemisch (600) in den rohrförmigen Hohlkörper (210) aufweisen, welche am Ende (280) der Gießharke (200, 260) in den rohrförmigen Hohlkörper (210) mündet und das Reaktionsgemisch (600) endseitig einspeist.

7. Verfahren nach Anspruch 5 oder 6, wobei die Austrittsöffnungen (220) durch Austrittsrohre (225) gebildet sind, und insbesondere wobei die Länge (240) der Austrittsrohre (225) mit zunehmendem Abstand von der Einspeisestelle des Reaktionsgemisches (600) durch die Zuführung (230) abnimmt.

8. Verfahren nach Anspruch 5 bis 7, wobei der Innendurchmesser des rohrförmigen Hohlkörpers (210) mit zunehmendem Abstand von der Einspeisestelle des Reaktionsgemisches (600) durch die Zuführung (230) abnimmt.

9. Verfahren nach einem der vorgenannten Ansprüche, wobei ein Mischkopf (700) für das aufschäumende Reaktionsgemisch (600) vorgesehen ist, wobei der Mischkopf (700) mit den wenigstens zwei Gießharken (200, 260) fluidisch verbunden ist und wobei insbesondere der Mischkopf (700) der wenigstens zwei Gießharken (200, 260) fluidisch vorgeschaltet ist.

10. Verfahren nach einem der Ansprüche 8 bis 10, wobei die Austrittsrohre (225) der Gießharken (200, 260) in einem Winkel (270) von ≥ 5° und vorzugsweise von ≥ 5° und ≤ 30° zu einer orthogonal zur Ebene der Deckschicht (500) stehenden Achse (520) ausgerichtet sind.

11. Verfahren nach einem der vorangehenden Ansprüche, wobei die Deckschicht (500) ein Metall, ein Kunststoff, einen glasfaserhaltigen, einem mineralfaserhaltigen und/oder einen cellulosehaltigen Werkstoff aufweist und/oder dass das aufschäumende Reaktionsgemisch (600) eine Isocyanat - reaktive Komponente und eine Isocyanatkomponente aufweist.

12. Verwendung eines Verfahrens nach einem der Ansprüche 1 bis 11 zur Herstellung eines PUR/PIR- Schaum haltigen Verbundelementes.

## Claims

1. Process for applying a foaming reaction mixture (600) to a covering layer (500) for producing a composite element using an apparatus (100) comprising at least two casting rakes (200, 260) having a tubular hollow body (210) which extends along a central axis (250) and has at least two exit openings (220) for exit of the foaming reaction mixture (600), and where the casting rakes (200, 260) and the covering layer (500) are moved relative to one another along a longitudinal axis (510),
**characterized in that** the central axis (250) of the at least two casting rakes (200, 260) and the longitudinal axis (510) of motion enclose an angle (400, 410) of ≤ 80° relative to one another and
a) **in that** the casting rakes are arranged at angles of equal magnitude relative to the axis of motion of the covering layer or
b) **in that** the magnitude of the angles at which two casting rakes are aligned relative to the direction of motion of the covering layer is different, such that the two casting rakes are arranged relative to one another in the form of an asymmetric V.

2. Process according to Claim 1, wherein the central axes (250) of the at least two casting rakes (200, 260) are aligned parallel to the plane of the covering layer (500), and the casting rakes angled relative to one another in a V shape form a plane with the central axes of the tubular hollow bodies thereof that extends parallel to the plane formed by the covering layer, and wherein
- the central axis (250) of the tubular hollow body (210) has a pointing arrangement at the angle (400, 410) to the direction of motion of the casting rakes (200, 260) relative to the covering layer (500) or
- the central axis (250) of the tubular hollow body (210) has a dragging arrangement at the angle (400, 410) opposite to the direction of motion of the casting rakes (200, 260) relative to the covering layer (500).

3. Process according to either of Claims 1 and 2, wherein the number of exit openings (220) of a casting rake (200, 260) is in the range from three to forty.

4. Process according to any of the preceding claims, wherein the central axis (250) of a casting rake (200, 260) is arranged at an angle (400, 410) in the range from ≥ 60° to ≤ 80° relative to the longitudinal axis (510) of motion.

5. Process according to any of the preceding claims, wherein the casting rakes (200, 260) have a feed line (230) for the reaction mixture (600) into the tubular hollow body (210), which feed line (230) opens essentially centrally, based on the length of the tubular hollow body (210), into the tubular hollow body (210) and preferably has an identical structure to the tubular hollow body (210).

6. Process according to any of Claims 1 to 4, wherein the casting rakes (200, 260) have a feed line (230) for the reaction mixture (600) into the tubular hollow body (210), which feed line (230) opens into the tubular hollow body (210) at the end (280) of the casting rake (200, 260) and feeds the reaction mixture (600) in at the end.

7. Process according to Claim 5 or 6, wherein the exit openings (220) are formed by exit tubes (225) and, in particular, the length (240) of the exit tubes (225) decreases with increasing distance from the point at which the reaction mixture (600) is fed in via the feed line (230).

8. Process according to any of Claims 5 to 7, wherein the internal diameter of the tubular hollow body (210) decreases with increasing distance from the point at which the reaction mixture (600) is fed in via the feed line (230).

9. Process according to any of the preceding claims, wherein a mixing head (700) for the foaming reaction mixture (600) is provided and the mixing head (700) is fluidically connected to the at least two casting rakes (200, 260) and, in particular, the mixing head (700) is arranged fluidically upstream of the at least two casting rakes (200, 260).

10. Process according to any of Claims 8 to 10, wherein the exit tubes (225) of the casting rakes (200, 260) are aligned at an angle (270) of ≥ 5° and preferably of ≥ 5° and ≤ 30° to an axis (520) orthogonal to the plane of the covering layer (500).

11. Process according to any of the preceding claims, wherein the covering layer (500) comprises a metal, a plastic, a glass fibre-containing material, a mineral fibre-containing material and/or a cellulose-containing material and/or the foaming reaction mixture (600) has an isocyanate-reactive component and an isocyanate component.

12. Use of a process according to any of Claims 1 to 11 for producing a composite element containing PUR/PIR foam.

## Revendications

1. Procédé pour l'application d'un mélange réactionnel moussant (600) sur une couche de recouvrement (500) pour la fabrication d'un élément composite, en utilisant un dispositif (100), comprenant au moins deux râteaux de coulée (200, 260) avec un corps creux tubulaire (210), lequel corps creux (210) s'étend le long d'un axe central (250), et au moins deux ouvertures de sortie (220) pour la sortie du mélange réactionnel moussant (600), et dans lequel les râteaux de coulée (200,260) et la couche de recouvrement (500) sont déplacés les uns par rapport aux autres selon un axe longitudinal (510),
**caractérisé en ce que** l'axe central (250) des au moins deux râteaux de coulée (200, 260) et l'axe longitudinal (510) du déplacement forment l'un par rapport à l'autre un angle (400, 410) de ≤ 80° et
a) **en ce que** les râteaux de coulée sont agencés selon des angles de montants égaux par rapport à l'axe de déplacement de la couche de recouvrement, ou
b) **en ce que** les montants des angles selon lesquels deux râteaux de coulée sont orientés par rapport à la direction de déplacement de la couche de recouvrement sont différents, de telle sorte que les deux râteaux de coulée sont agencés l'un par rapport à l'autre sous la forme d'un V asymétrique.

2. Procédé selon la revendication 1, dans lequel les axes centraux (250) des au moins deux râteaux de coulée (200, 260) sont orientés parallèlement au plan de la couche de recouvrement (500), et les râteaux de coulée inclinés en forme de V l'un par rapport à l'autre définissent avec les axes centraux de leurs corps creux tubulaires un plan qui s'étend parallèlement au plan qui est formé par la couche de recouvrement, et dans lequel
- l'axe central (250) du corps creux tubulaire (210) est orienté selon un agencement en piqué par l'angle (400, 410) dans la direction de déplacement des râteaux de coulée (200, 260) par rapport à la couche de recouvrement (500) ou
- l'axe central (250) du corps creux tubulaire (210) est orienté selon une configuration en traînée par l'angle (400, 410) à l'opposé de la direction de déplacement des râteaux de coulées (200, 260) par rapport à la couche de recouvrement (500).

3. Procédé selon l'une quelconque des revendications 1 à 2, dans lequel le nombre d'ouvertures de sortie (220) d'un râteau de coulée (200, 260) est de trois à quarante.

4. Procédé selon l'une quelconque des revendications précédentes, dans lequel l'axe central (250) d'un râteau de coulée (200, 260) est agencé selon un angle (400, 410) compris entre ≥ 60° et ≤ 80° par rapport à l'axe longitudinal (510) du déplacement.

5. Procédé selon l'une quelconque des revendications précédentes, dans lequel les râteaux de coulée (200, 260) présentent une amenée (230) pour le mélange réactionnel (600) dans le corps creux tubulaire (210), qui, par rapport à la longueur du corps creux tubulaire (210), débouche essentiellement au milieu du corps creux tubulaire (210) et qui est de préférence configurée de manière intégrée au corps creux tubulaire (210).

6. Procédé selon l'une quelconque des revendications 1 à 4, dans lequel les râteaux de coulée (200, 260) présentent une amenée (230) pour le mélange réactionnel (600) dans le corps creux tubulaire (210), qui débouche à l'extrémité (280) du râteau de coulée (200, 260) dans le corps creux tubulaire (210) et introduit le mélange réactionnel (600) à l'extrémité.

7. Procédé selon la revendication 5 ou 6, dans lequel les ouvertures de sortie (220) sont formées par des tubes de sortie (225), et notamment dans lequel la longueur (240) des tubes de sortie (225) diminue avec une distance croissante de l'emplacement d'introduction du mélange réactionnel (600) par l'amenée (230).

8. Procédé selon les revendications 5 à 7, dans lequel le diamètre intérieur du corps creux tubulaire (210) diminue avec une distance croissante de l'emplacement d'introduction du mélange réactionnel (600) par l'amenée (230) .

9. Procédé selon l'une quelconque des revendications précédentes, dans lequel une tête de mélange (700) pour le mélange réactionnel moussant (600) est prévue, dans lequel la tête de mélange (700) est reliée fluidiquement aux au moins deux râteaux de coulée (200, 260) et dans lequel la tête de mélange (700) des au moins deux râteaux de coulée (200, 260) est notamment montée en amont fluidiquement.

10. Procédé selon l'une quelconque des revendications 8 à 10, dans lequel les tubes de sortie (225) des râteaux de coulée (200, 260) sont orientés selon un angle (270) de ≥ 5° et de préférence de ≥ 5° et ≤ 30° par rapport à un axe (520) orthogonal au plan de la couche de recouvrement (500).

11. Procédé selon l'une quelconque des revendications précédentes, dans lequel la couche de recouvrement (500) comprend un métal, une matière plastique, un matériau contenant des fibres de verre, un matériau contenant des fibres minérales et/ou un matériau contenant de la cellulose et/ou en ce que le mélange réactionnel moussant (600) comprend un composant réactif aux isocyanates et un composant isocyanate.

12. Utilisation d'un procédé selon l'une quelconque des revendications 1 à 11 pour la fabrication d'un élément composite contenant de la mousse PUR/PIR.
